# EUROPEAN PATENT APPLICATION

(11) **EP 2 876 136 A1**
(43) Date of publication of application: **27.05.2015**
(21) Application number: 14179388.5
(22) Date of filing: 31.07.2014
(51) Int. Cl.: C08K 5/54

(54) **Aqueous Silane Coupling Agent Composition, Making Method, Surface Treating Agent, and Article**

(30) Priority: 07.08.2013 JP 2013164336
(71) Applicant: Shin-Etsu Chemical Co., Ltd., Chiyoda-ku Tokyo (JP)
(72) Inventor: Tsuchida, Kazuhiro, Annaka-shi, Gunma (JP)
(74) Representative: Stoner, Gerard Patrick

(57) **Abstract**

A composition is provided comprising a silane coupling agent having dicarboxylic acid group, from hydrolysis of a succinic anhydride group, and water. The composition has a solids content of 0.5-50 wt% based on the entire composition and a volatile organic compound content of up to 10 wt% based on volatile components which are detectable by headspace gas chromatography. The composition being substantially free of volatile organic compounds, such as alcohols, does not release volatile compounds with the lapse of time, has improved storage stability under high-temperature conditions, and is effective as a resin modifier.

## Description

### TECHNICAL FIELD

This invention relates to an aqueous silane coupling agent composition based on a dicarboxylic acid-containing silane compound, a method of preparing and using the same, a surface treating agent, and an article treated therewith.

### BACKGROUND

Organosilicon compounds having a hydrolysable silyl group and an organic reactive group are generally known as silane coupling agents and often used as adhesives, paint additives and resin modifiers, for example, since they are capable of forming bonds between inorganic materials and organic materials. The problem associated with the use of a silane coupling agent in hydrolysate form is that it contains a high proportion of a volatile organic solvent which is added as the stabilizer/diluent for an alcohol and silanol resulting from hydrolysis of hydrolysable silyl groups as typified by alkoxysilyl groups.

In general, silane sol-gel coating materials having a certain level of storage stability may be prepared using partial hydrolysates of alkoxysilanes and acid-based hydrolytic catalysts. However, these coating materials are limited to alcohol and organic solvent based systems. If the system uses a sufficient amount of water to complete hydrolysis of alkoxysilanes and has a high solid content, then the system undergoes a substantial loss of storage stability and becomes difficult to control hydrolytic condensation of alkoxysilanes in the course of coating material preparation, leading to a molecular weight buildup or gelation.

JP-A 2009-524709 discloses a water-dilutable sol-gel composition essentially comprising glycidyloxypropylalkoxysilane, aqueous silica sol, organic acid, and organometallic compound of titanium or zirconium, which serves as a low alcohol content, aqueous siloxane coating material. With respect to the applications of this composition, only corrosion control coats and primer coats are referred to while its effectiveness is demonstrated nowhere. This coating material leaves a concern that organic acids may remain as the volatile organic compound.

Typical organic reactive groups on silane coupling agents include vinyl, amino, epoxy, (meth)acrylic, mercapto, isocyanate, ketimine structure, and styryl groups. Silane coupling agents having such groups are well known and used in a variety of applications.

Among others, silane coupling agents having an amino group contributing to water solubility have not only a high water solubility, but also a high aqueous solution stability so that an alcohol-free aqueous silane solution may be prepared by removing the alcohol resulting from hydrolysis. They are expected as less environmental load material. On the other hand, the preparation and application of alcohol-free aqueous solutions of silane coupling agents having a carboxylic acid group exhibiting similarly high water solubility have not been reported in the art.

Silane coupling agents having an acid anhydride group capable of generating a carboxylic acid group upon hydrolysis as the functional group and hydrolytic condensates thereof find typical applications as adhesion modifier in pressure-sensitive adhesive compositions (JP-A H08-302320) and crosslinker in curable epoxy resin compositions (JP-A 2006-022158). They are also used as modifier for polyimide resins and in other applications.

JP-A 2012-046576 discloses that a silanol type silane coupling agent having a dicarboxylic acid structure which is obtained from hydrolysis of the acid anhydride-containing silane coupling agent is useful as modifier for encapsulant epoxy resins. No reference is made to the alcohol generated from the coupling agent. This technology falls in the range that silane coupling agents are used in hydrolytic aqueous solution form.

It has been demonstrated that silane coupling agents having an acid anhydride group or carboxylic acid group as the functional group are effective in a wide variety of applications. Materials having similar effects, but not generating volatile organic compounds on use are desired in the related field since they are environment friendly.

### Citation List

Patent Document 1: JP-A 2009-524709 (WO 2007/085320)
Patent Document 2: JP-A H08-302320
Patent Document 3: JP-A 2006-022158
Patent Document 4: JP-A 2012-046576

### THE INVENTION

An object of the invention is to provide new and useful aqueous silane coupling agent compositions, comprising a silane coupling agent having a dicarboxylic acid group as the functional group. Desirably they are free or substantially free of volatile organic compounds such as alcohols, do not release volatile compounds with the lapse of time, have good or improved storage stability under high-temperature conditions, and are promising as modifiers. Methods of preparing and using such compositions are a further aspect. Other aspects are to provide a surface treating agent comprising the composition and an article treated therewith.

The inventor has found that if an aqueous silane coupling agent composition comprising (i) a silane coupling agent having the general formula (1), defined below, and (ii) water is designed such that a solids content is 0.5 to 50% by weight of the entire composition and the content of volatile organic compounds is up to 10% by weight of volatile components in the composition, this composition is free of volatile organic compounds such as alcohols, does not release volatile compounds with the lapse of time, has improved storage stability under high-temperature conditions, and has promising properties as a modifier.

In a first aspect, the invention provides an aqueous silane coupling agent composition comprising (i) a silane coupling agent having the general formula (1): 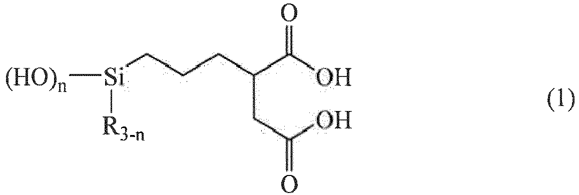 wherein R is a monovalent hydrocarbon group of 1 to 10 carbon atoms and n is 2 or 3, and (ii) water. The composition has a solid content of 0.5 to 50% by weight and contains volatile components which are detectable by headspace gas chromatography, the content of volatile organic compounds being up to 10% by weight of the volatile components.

Preferably the aqueous silane coupling agent composition has a solid content of 30 to 50% by weight and experiences a viscosity buildup of less than 10% when stored at 50°C for one month.

In a second aspect, the invention provides a method for preparing an aqueous silane coupling agent composition, such as any proposed herein, comprising the steps of hydrolysing a succinic anhydride-containing silane coupling agent having the general formula (2): 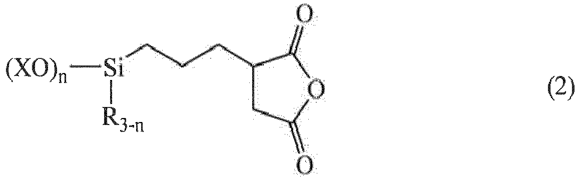 wherein R and n are as defined above, and X is a monovalent hydrocarbon group of 1 to 4 carbon atoms, and removing the alcohol generated.

In a third aspect, the invention provides a surface treating agent consisting of or comprising the aqueous silane coupling agent composition defined above, and the use thereof as or in a surface treating agent e.g. for forming a composite of an inorganic substrate and an organic resin.

In a fourth aspect, the invention provides an article comprising a substrate treated with the surface treating agent defined above. Preferably, the substrate is a glass fiber member selected from among glass cloth, glass tape, glass mat and glass paper. Also preferably, the substrate is an inorganic filler, ceramic or metal.

### ADVANTAGEOUS EFFECTS

Since the aqueous silane coupling agent composition is based on a silane coupling agent having a dicarboxylic acid group in a molecule, it exhibits high water solubility and improved stability even in high concentrations. The silane coupling agent used in the aqueous silane coupling agent composition can be characterised by substantial completion of hydrolysis, whereby the reactivity of silyl group with inorganic materials is high, and the hydrolysis step that prior art silane coupling agents undergo during use can be avoided. Therefore, productivity on actual use is high. In the event that substantially no volatile organic compounds are contained or released, the composition poses minimal burdens to the workers and the working environment. Resins modified with the inventive surface treating agent are tightly bondable to various inorganic materials including glass.

### FURTHER EXPLANATIONS; OPTIONS AND PREFERENCES

The invention provides a stable aqueous silane coupling agent composition comprising (i) a silane coupling agent having the general formula (1): 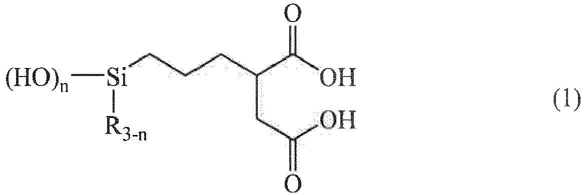 wherein R is a monovalent hydrocarbon group of 1 to 10 carbon atoms, and n is 2 or 3, and (ii) water.

In formula (1), R is a monovalent hydrocarbon group of 1 to 10 carbon atoms, preferably 1 to 6 carbon atoms. Examples include alkyl groups such as methyl, ethyl, propyl, isopropyl, butyl, isobutyl, tert-butyl, pentyl, neopentyl, hexyl, and octyl, cycloalkyl groups such as cyclohexyl, alkenyl groups such as vinyl, allyl, and propenyl, aryl groups such as phenyl, tolyl, xylyl, and naphthyl, and aralkyl groups such as benzyl, phenylethyl and phenylpropyl. Inter alia, methyl, ethyl and phenyl are preferred.

The subscript n is 2 or 3. The silane coupling agent of formula (1) wherein n=1 is inadequate because it generates less silanol upon hydrolysis and thus exhibits low water solubility, insufficient stability in aqueous solution, and low reactivity to inorganic materials.

The aqueous silane coupling agent composition contains volatile components. These are detectable by known headspace gas chromatography. The content of volatile organic compounds should be up to 10% by weight, preferably up to 5% by weight of the volatile components, and most preferably nil. If the content of volatile organic compounds exceeds 10% by weight, the composition poses substantial burdens to the workers and the surrounding environment and fails to attain the objects of the invention. Suitable measurement methods are known to the skilled person and exemplified below.

"Volatile organic compounds" refers primarily to alcohol resulting from hydrolysis of alkoxysilyl groups on the silane coupling agent. Also, water-miscible organic solvents such as alcohols which are intentionally added as a stabilizer to a silane coupling agent aqueous solution, as alluded to previously, and organic acids which are known to be used as hydrolytic catalyst for silanes, would be included in the "volatile organic compounds" category.

The aqueous silane coupling agent composition should have a solid content of 0.5 to 50% by weight, preferably 30 to 50% by weight, and more preferably 30 to 40% by weight based on the entire composition. Specifically, the amount (g) of solids remaining when the composition is heated and dried, divided by the total amount (g) of the initial composition should range from 0.005 to 0.5. If the solid content is less than 0.5% by weight, the composition forms a film which does not exhibit sufficient water resistance and primer effect. If the solid content exceeds 50% by weight, the composition becomes difficult to prepare because of a substantial loss of stability.

In a preferred embodiment, the aqueous silane coupling agent composition has a solids content of at least 30% by weight based on the entire composition, and experiences a viscosity buildup of less than 10% when stored at 50°C for one month. Notably, the viscosity is measured at 25°C by a capillary kinematic viscometer.

The aqueous silane coupling agent composition may be prepared by hydrolysing a succinic anhydride-containing silane coupling agent having the general formula (2) and removing the alcohol generated. 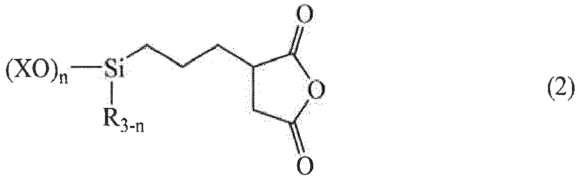 Herein R and n are as defined above, and X is a monovalent hydrocarbon group of 1 to 4 carbon atoms. The step of removing the alcohol generated from hydrolysis ensures that the content of volatile organic compounds (mainly alcohols) is not more than 10% by weight of the volatile components which are detectable by headspace gas chromatography (GC).

In formula (2), X is a monovalent hydrocarbon group of 1 to 4 carbon atoms, examples of which include alkyl groups such as methyl, ethyl, propyl, isopropyl, butyl, isobutyl, and tert-butyl. Inter alia, methyl and ethyl are preferred.

Examples of the succinic anhydride-containing silane coupling agent include (trimethoxysilyl)propylsuccinic anhydride, (triethoxysilyl)propylsuccinic anhydride, (methyldimethoxysilyl)propylsuccinic anhydride, and (methyldiethoxysilyl)propylsuccinic anhydride, but are not limited thereto.

It is not always true that a stable aqueous silane coupling agent composition is prepared from any silane coupling agents. In the practice of the invention, the dicarboxylic acid structure created by hydrolysis becomes a key skeleton in obtaining the desired aqueous material.

Suitable hydrolysis conditions include a temperature of 30 to 110°C and a reduced pressure of 60 hPa to atmospheric pressure, but are not limited thereto as long as the stability of the resulting composition is not adversely affected. If the reaction temperature exceeds 110°C, the composition may become difficult to prepare because of a substantial loss of stability. If the reaction temperature is lower than 30°C, hydrolysis reaction may not fully proceed, leaving the risk of alcohol release with the lapse of time.

The step of removing the generated alcohol after the hydrolytic reaction may be conducted, for example, by atmospheric distillation and vacuum distillation. The distillation step may be conducted subsequently to or concurrently with the hydrolytic reaction step. From the standpoint of production efficiency, the distillation step concurrent with the hydrolytic reaction step is preferred. The temperature and pressure conditions during the concurrent step are the same as those during the hydrolytic reaction step.

The amount of water used in hydrolytic reaction is at least 4 moles per mole of the reactant, succinic anhydride-containing silane coupling agent. Any excess of water may be present in the hydrolytic reaction system because the inventive composition is substantially based on water as solvent.

On hydrolysis of the silane coupling agent it is particularly desirable that no hydrolytic catalyst, such as are known in the art, is used. On use of such a catalyst, it may be left at the end of alcohol removal step subsequent to hydrolysis. The composition containing residual catalyst is undesirable from the aspect of environmental load because the catalyst can be a volatile organic compound.

Since the main component has a silanol-containing structure as alluded to previously, the aqueous silane coupling agent composition functions by itself as a surface treating agent, for example, a primer or a modifier for composites of inorganic material and organic resin. The surface treating agent should preferably contain the main component or silane coupling agent in a concentration of 0.1 to 50%, more preferably 0.5 to 30% by weight of the entire surface treating agent.

Besides the aqueous silane coupling agent composition, additives such as surfactants, preservatives, discoloration preventive agents and antioxidants may be blended in the surface treating agent as long as the objects of the invention are not impaired.

The surface treating agent is used for surface treatment of substrates. The substrates may be made of inorganic materials which form bonds by reacting with hydrolysable silyl groups and organic materials such as organic resins which form bonds by reacting with carboxylic acid groups. The shape of substrates is not particularly limited. Typical inorganic materials include inorganic fillers of silicon, titanium, zirconium, magnesium, aluminum, indium, tin, and single, double or complex oxides thereof, fiber glass members such as glass fibers, glass cloth, glass tape, glass mat, and glass paper, ceramics, and metal substrates such as iron, aluminum, copper, silver, gold and magnesium. Typical organic materials include epoxy resins, phenolic resins, polyimide resins, unsaturated polyester resins, paper boards, wood, solid wood boards, laminated wood boards, and chip boards. The substrate is not limited to the materials illustrated herein.

In the surface treatment of a substrate with the surface treating agent, the treatment mode and curing conditions are not particularly limited. For example, the surface treating agent may be directly applied to the substrate by flow coating, dipping or spin coating. Also applicable is a kneading treatment wherein the surface treating agent is added to and mixed with a compound composed of an untreated inorganic filler and a resin as dispersing medium.

Typical curing conditions include heating and drying. Preferably, the surface treatment is followed by heating and drying at 60 to 180°C, more preferably 80 to 150°C for 5 minutes to 2 hours, for thereby removing the solvent and inducing chemical reaction between the silane coupling agent, which is the main component of the surface treating agent, and the substrate surface.

### EXAMPLES

Examples and Comparative Examples are given below for illustrating the invention, but the invention is not limited thereto. In Examples, all parts are by weight; viscosity is measured at 25°C according to JIS Z 8803, specific gravity measured at 25°C according to JIS Z 8804, and refractive index measured at 25°C according to JIS K 0062.

The alcohol (volatile organic component) content was measured using a headspace autosampler TurboMatrix HS40 (Perkin Elmer Inc.), charging a vial having a volume of 20 mL with 1 g of a sample, and sealing the vial with a septum. The sample was held at 60°C until gas-liquid equilibrium was reached (10 minutes), and the gas component collected.

| | |
|---|---|
| GC system: | HP7820A by Agilent Technologies |
| Detector: | thermal conductivity detector (TCD) |
| Column: | HP Innowax 19091N-033 (length 30 m x inner diameter 0.25 mm x film thickness 0.15 µm) |
| Column temperature: | 40°C (1.5 min holding) □ 15°C/min □ 80°C (4 min holding), total measurement time 8.2 min |
| Injector temperature: | 250°C |
| Detector temperature: | 250°C |
| Carrier gas: | He |
| Carrier gas flow rate: | 1.4 mL/min |

### Preparation of aqueous silane coupling agent composition

### Example 1

A 1-L separable flask equipped with a stirrer, reflux condenser, dropping funnel and thermometer was charged with 262.3 parts of (trimethoxysilyl)propylsuccinic anhydride (X-12-967C by Shin-Etsu Chemical Co., Ltd.), to which 1,000 parts of deionized water was admitted. The contents were stirred and heated. Methanol formed by reaction and water were distilled off under atmospheric pressure, until an internal temperature of about 100°C was reached. The amount of methanol and water distilled off at this point totaled to 500 parts. Deionized water was added to the reaction product to form a composition having a solid content of 30 wt%, which was a pale yellow clear liquid having a viscosity of 4.1 mm²/s, a specific gravity of 1.10, a refractive index of 1.374, pH 1.9, and a methanol content of less than 0.1 wt% of the gas component as measured by the headspace GC.

The reaction product is represented by the following formula.

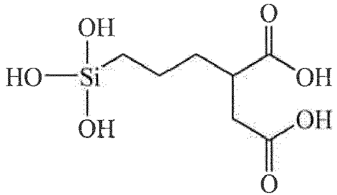

### Example 2

A reaction product was prepared as in Example 1 except that (methyldimethoxysilyl)propylsuccinic anhydride was used instead of (trimethoxysilyl)propylsuccinic anhydride. Deionized water was added to the reaction product to form a composition having a solid content of 30 wt%, which was a pale yellow clear liquid having a viscosity of 8.4 mm²/s, a specific gravity of 1.06, a refractive index of 1.351, pH 1.9, and a methanol content of less than 0.1 wt% of the gas component as measured by said headspace GC.

The reaction product is represented by the following formula.

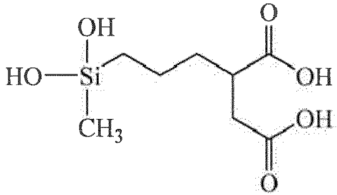

### Comparative Example 1

### [Preparation of "Hydrolysate 1" in Example of JP-A 2012-046576]

A 1-L separable flask equipped with a stirrer, reflux condenser, and thermometer was charged with 262.3 parts of (trimethoxysilyl)propylsuccinic anhydride (X-12-967C by Shin-Etsu Chemical Co., Ltd.), to which 144 parts of deionized water was admitted. The contents were thoroughly stirred until the mixture ceased to separate into two layers. The end product was obtained as a pale yellow clear liquid. The end product had a methanol content of 15 wt% of the gas component by said 60°C headspace GC measurement. On IR analysis, peaks assigned to carboxyl group were observed while peaks assigned to acid anhydride vanished.

### Comparative Example 2

The procedure of Example 1 was repeated except that (dimethylmethoxysilyl)propylsuccinic anhydride was used instead of (trimethoxysilyl)propylsuccinic anhydride. The reaction solution was uniform during hydrolysis. In the subsequent alcohol removal step, the solution increased its viscosity in proportion to methanol removal and eventually lost fluidity, failing to yield the desired material.

### Evaluation of adhesion between glass fibers and epoxy resin

### Examples 3 and 4 and Comparative Examples 3 to 5

The reaction product obtained above or (trimethoxysilyl)propylsuccinic anhydride was diluted with water to form a 1 wt% dilution, which was used as surface treating agent. Glass filaments having a diameter of 20 µm were treated with the agent and dried at 100°C for 30 minutes, yielding surface treated glass filaments. Onto the surface treated glass filaments, a heat curable composition consisting of an epoxy resin (JER828 by Japan Epoxy Resin Co., Ltd.) and a curing agent (triethylene tetramine) was applied as droplets having a diameter of several tens to several hundreds of microns such that the droplets might not contact with each other, and heat cured (specifically heated at 80°C for 1.5 hours and at 100°C for further 2 hours) to form a spherical resin bead. The shear strength between surface treated glass filament and epoxy resin was measured by the micro-droplet method using an analyzer for evaluation of interfacial properties of composite materials (HM410 by Tohei Sangyo Co., Ltd.). The shear strength τ (MPa) per unit area is given as τ = F/πDL wherein D (µm) is the diameter of a filament, L (µm) is the length of a portion of the filament buried in the resin bead, and F (mN) is the load required to withdraw the resin bead in filament axial direction. Table 1 shows the main component of the surface treating agent and the measurements of shear strength.

**Table 1**

| | | Surface treating agent's main component | Shear strength (MPa) |
|---|---|---|---|
| Example | 3 | Product of Example 1 | 38.9 |
| | 4 | Product of Example 2 | 36.3 |
| Comparative Example | 3 | not added (untreated) | 33.7 |
| | 4 | X-12-967C | 33.1 |
| | 5 | Product of Comparative Example 1 | 25.6 |

| | | | |
|---|---|---|---|
| X-12-967C: (trimethoxysilyl)propylsuccinic anhydride | | | |

The test results of Examples and Comparative Examples demonstrate that the surface modified with the surface treating agents embodying the invention was effective for promoting adhesion to epoxy resins, and the efficiency of treatment of glass filaments is improved owing to thorough hydrolysis, exerting a satisfactory coupling effect.

### Evaluation of adhesion between silver substrate and encapsulating epoxy resin

### Examples 5 and 6 and Comparative Examples 6 to 8

An encapsulating epoxy resin compound having the formulation shown in Table 2 was prepared according to the Example of JP-A 2012-046576. A tablet of the resin compound was integrally molded to a silver substrate at 175°C and 6.9 MPa for 2 minutes to form a frustoconical epoxy resin part (top diameter 3 mm, bottom diameter 3.6 mm, height 3 mm, interface area 10 mm²) on the silver substrate (diameter 3.6 mm, thickness 0.5 mm). With the silver substrate fixedly secured, a torque needed to force the epoxy resin part at its side until separation was measured. The results are shown in Table 2.

In Table 2, the amount of the aqueous silane coupling agent composition added is expressed in terms of the amount of its main component, that is, solid content.

**Table 2**

| Formulation (pbw) | Example | | Comparative Example | | |
|---|---|---|---|---|---|
| | 5 | 6 | 6 | 7 | 8 |
| Product of Example 1 | 0.2 | | | | |
| Product of Example 2 | | 0.2 | | | |
| Product of Comparative Example 1 | | | 0.2 | | |
| X-12-967C | | | | 0.2 | |
| Epoxy resin | 5.6 | 5.6 | 5.6 | 5.6 | 5.6 |
| Phenolic resin curing agent | 5.5 | 5.5 | 5.5 | 5.5 | 5.5 |
| Inorganic filler | 88 | 88 | 88 | 88 | 88 |
| Silane coupling agent | 0.1 | 0.1 | 0.1 | 0.1 | 0.1 |
| Cure promoter | 0.2 | 0.2 | 0.2 | 0.2 | 0.2 |
| Parting agent | 0.2 | 0.2 | 0.2 | 0.2 | 0.2 |
| Coloring agent | 0.3 | 0.3 | 0.3 | 0.3 | 0.3 |
| Adhesion to Ag substrate (N) | 12 | 11 | 9 | 7 | 4 |

- X-12-967C:: (trimethoxysilyl)propylsuccinic anhydride
- Epoxy resin:: YX-400K by Mitsubishi Chemical Corp.
- Phenolic resin curing agent:: MEH-7851SS by Meiwa Plastic Industries, Ltd.
- Inorganic filler:: spherical fused silica, average particle size 10.8 µm, BET surface area 5.1 m²/g
- Silane coupling agent:: KBM-573 by Shin-Etsu Chemical Co., Ltd.
- Cure promoter:: addition product of triphenylphosphine and p-benzoquinone
- Parting agent:: oxidized polyethylene wax PED 191 by Clariant
- Coloring agent:: carbon black Carbon #5 by Mitsubishi Chemical Corp.

The results of the Examples and Comparative Examples demonstrate that the surface modification by integral blending of the surface treating agents embodying the invention is effective for improving adhesion to epoxy resin, and the efficiency of treatment of silica and silver substrate is improved owing to thorough hydrolysis, exerting a satisfactory coupling effects.

### Evaluation of stability of aqueous silane coupling agent composition

### Examples 1 and 2 and Comparative Example 9

The compositions of Examples 1 and 2 and the composition of Comparative Example 9 which was obtained by adjusting the composition of Example 1 to a solid content of 60% by weight, in sealed state, were stored in a thermostat chamber at 50°C. Table 3 shows a percent buildup of viscosity from the initial viscosity with passage of time.

**Table 3**

| | Viscosity buildup (%) during 50°C storage | | |
|---|---|---|---|
| | After 10 days | After 30 days | After 60 days |
| Example 1 | 0.5 | 0.4 | 0.5 |
| Example 2 | 0.5 | 0.7 | 1.1 |
| Comparative Example 9 | 3.1 | 22.6 | gelled |

| | | | |
|---|---|---|---|
| Comparative Example 9: obtained by adjusting the composition of Example 1 to a solid content of 60% by weight | | | |

As seen from the results of Examples and Comparative Examples, aqueous silane coupling agent compositions of the invention maintained satisfactory stability even at a high temperature of 50°C.

### Notes

For the avoidance of doubt it is confirmed that in the general description above, in the usual way the proposal of general preferences and options in respect of different features of the coupling agent composition, preparing method, use, surface treating agent and article constitutes the proposal of general combinations of those general preferences and options for the different features, insofar as they are combinable and compatible and are put forward in the same context.

In respect of numerical ranges disclosed in the present description it will of course be understood that in the normal way the technical criterion for the upper limit is different from the technical criterion for the lower limit, i.e. the upper and lower limits are intrinsically distinct proposals.

## Claims

1. An aqueous silane coupling agent composition comprising (i) a silane coupling agent having the general formula (1): 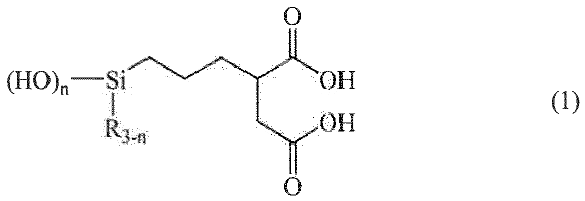 wherein R is monovalent hydrocarbon group of 1 to 10 carbon atoms and n is 2 or 3, and (ii) water,
the composition having a solids content of 0.5 to 50% by weight and containing volatile components which are detectable by headspace gas chromatography, the content of volatile organic compounds being not more than 10% by weight of the volatile components.

2. An aqueous silane coupling agent composition of claim 1 which has a solids content of 30 to 50% by weight and experiences a viscosity buildup of less than 10% when stored at 50°C for one month.

3. An aqueous silane coupling agent composition of claim 1 or 2 in which the content of volatile organic compounds is not more than 5% by weight of the volatile components.

4. A method for preparing an aqueous silane coupling agent composition of claim 1, 2 or 3, comprising the steps of hydrolysing a succinic anhydride-containing silane coupling agent having the general formula (2): 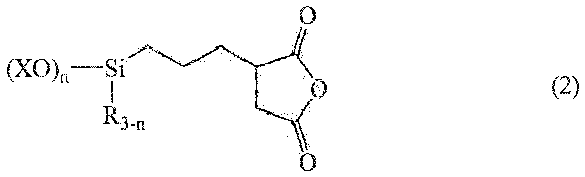 wherein R and n are as defined above, and X is a monovalent hydrocarbon group of 1 to 4 carbon atoms, and removing the alcohol generated.

5. A method of claim 5 in which the alcohol is removed by distillation subsequent to or concurrent with the hydrolysis.

6. Use of an aqueous silane coupling agent composition of any one of claims 1 to 3 as or in a surface treating agent for the bonding of a substrate, such as an inorganic substrate, to organic resin.

7. Use according to claim 6 in which the surface treating agent is applied to the surface of the substrate or is included as a modifier in the organic resin.

8. A surface treating agent consisting of or comprising an aqueous silane coupling agent composition of claim 1, 2 or 3.

9. A surface treating agent of claim 8 which is an aqueous dilution of the aqueous silane coupling agent composition, containing 0.5 to 30% by weight of the silane coupling agent, and optionally one or more additives selected from surfactants, preservatives, discoloration preventive agents and antioxidants.

10. An article comprising a substrate treated with a surface treating agent of claim 8 or 9.

11. The article of claim 10 wherein the substrate is a glass fiber member selected from the group consisting of glass cloth, glass tape, glass mat and glass paper.

12. The article of claim 10 wherein the substrate is an inorganic filler.

13. The article of claim 10 wherein the substrate is ceramic or metal.
